# EUROPÄISCHE PATENTSCHRIFT

(11) **EP 3 251 194 B1**
(45) Veröffentlichungstag und Bekanntmachung des Hinweises auf die Patenterteilung: **09.11.2022**
(21) Anmeldenummer: 15741763.5
(22) Anmeldetag: 20.03.2015
(51) Int. Cl.: H02J 7/34, H02M 7/483

(54) **ENERGIESPEICHERANORDNUNG**
ENERGY STORAGE ARRANGEMENT
ENSEMBLE D'ACCUMULATION D'ÉNERGIE

(43) Veröffentlichungstag der Anmeldung: 06.12.2017
(73) Patentinhaber: Siemens Energy Global GmbH & Co. KG, 81739 München (DE)
(72) Erfinder: ALVAREZ VALENZUELA, Rodrigo Alonso, 90419 Nürnberg (DE); BÖHME, Daniel, 90480 Nürnberg (DE); PIESCHEL, Martin, 90473 Nürnberg (DE); SPAHIC, Ervin, 91052 Erlangen (DE); VIETH, Michael, 90482 Nürnberg (DE)
(86) Internationale Anmeldenummer: PCT/EP2015/055968
(87) Internationale Veröffentlichungsnummer: WO 2016/150466

(56) Entgegenhaltungen:
- EP-A1- 2 608 393
- WO-A1-2014/170059
- CN-A- 101 710 704
- US-A1- 2011 163 702
- US-A1- 2013 128 635

## Beschreibung

Die Erfindung bezieht sich auf eine Energiespeicheranordnung, die zumindest eine Reihenschaltung mit mindestens zwei in Reihe geschalteten Teilmodulen und einer Induktivität umfasst, wobei zumindest eines der Teilmodule einer oder mehrerer der Reihenschaltungen ein Eingangsmodul und ein zumindest einen elektrischen Energiespeicher aufweisendes Speichermodul umfasst.

Eine entsprechende Energiespeicheranordnung ist in der internationalen Patentanmeldung WO 2012/156261 A2 beschrieben.

Aus der Patentanmeldung US 2011/163702 A1 ist eine leistungselektronische Schaltung mit verteilten Bremswiderständen bekannt. Dabei ist eine Mehrzahl von Submodulen in einer elektrischen Reihenschaltung angeordnet. Jedes Submodul weist einen Kondensator sowie einen Bremswiderstand auf. Mittels des Bremswiderstands kann bei Bedarf die in dem Kondensator gespeicherte elektrische Energie in Wärmeenergie umgewandelt werden.

Die Patentanmeldung CN 101 710 704 A offenbart eine Einrichtung zur Wirkleistungs- und Blindleistungsregelung in Hochspannungssystemen. Diese Einrichtung weist einen Stromrichter mit einer Vielzahl von Vollbrücken-Modulen auf.

Aus der internationalen Patentanmeldung WO 2014/170059 A1 ist eine Gleichspannungswandleranordnung bekannt, die ein Eingangsmodul, ein Koppelmodul und ein Ausgangsmodul aufweist. Das Koppelmodul umfasst ein Spulenelement, das durch zwei Spulen gebildet ist.

Die Patentanmeldung US 2013/128635 A1 offenbart einen modularen Mehrstufenstromrichter, der Halbbrückenmodule oder Vollbrückenmodule aufweisen kann.

Aus der europäischen Patentanmeldung EP 2 608 393 A1 ist ein Fahrzeugantrieb für ein Elektrofahrzeug bekannt, der mehrere Versorgungsmodule aufweist. Jedes Versorgungsmodul besteht dabei aus einer Eingangshalbbrücke, einem Zwischenkreiskondensator, einer weiteren Halbbrücke und einem Energiespeicher.

Der Erfindung liegt die Aufgabe zugrunde, eine Energiespeicheranordnung anzugeben, bei der die Speichermodule effizienter als bisher betrieben werden können.

Diese Aufgabe wird erfindungsgemäß durch eine Energiespeicheranordnung mit den Merkmalen gemäß Patentanspruch 1 und durch einen Verfahren mit den Merkmalen gemäß Patentanspruch 11 gelöst. Vorteilhafte Ausgestaltungen der erfindungsgemäßen Energiespeicheranordnung sind in Unteransprüchen angegeben.

Danach ist erfindungsgemäß vorgesehen, dass elektrisch zwischen dem Eingangsmodul und dem Speichermodul ein Umpolmodul geschaltet ist, das in einem Normalbetriebsmodus und einem Polaritätsumpolbetriebsmodus betrieben werden kann, wobei das Umpolmodul im Normalbetriebsmodus die Ausgangsspannung des Eingangsmoduls mit - verglichen mit der Ausgangsspannung des Speichermoduls - derselben Polarität an das Speichermodul anlegt und wobei das Umpolmodul im Polaritätsumpolbetriebsmodus die Ausgangsspannung des Eingangsmoduls mit - verglichen mit der Ausgangsspannung des Speichermoduls - der inversen Polarität an das Speichermodul anlegt.

Ein wesentlicher Vorteil der erfindungsgemäßen Gleichrichteranordnung ist darin zu sehen, dass sich aufgrund der erfindungsgemäß vorgesehenen Umpolmöglichkeit die Speichermodule tiefer als bisher mit hoher Entladeleistung entladen lassen. Aufgrund des bei Speichermodulen stets vorhandenen Innenwiderstands führt der Entladestrom beim Entladevorgang zu einem Spannungsabfall über diesem Innenwiderstand, der einem Tiefentladen Grenzen setzt und ein Entladen mit konstanter Entladeleistung verhindern kann. Dies ist insbesondere bei Speichermodulen von Bedeutung, die Doppelschichtkondensatoren enthalten, denn Doppelschichtkondensatoren weisen bauartbedingt einen vergleichsweise hohen Innenwiderstand auf. Zwar lassen sich Doppelschichtkondensatoren prinzipiell beliebig tief und sogar vollständig entladen, jedoch ist dies aufgrund des Spannungsabfalls über dem Innenwiderstand nur mit abnehmendem Entladestrom, also nicht mit konstanter Entladeleistung, möglich. An dieser Stelle setzt die Erfindung an, indem sie mittels des Umpolmoduls die Möglichkeit eines Polaritätsumpolbetriebsmodus schafft und es erlaubt, von außen eine inverse Spannung anzulegen und trotz des Spannungsabfalls über dem Innenwiderstand eine gewünschte, insbesondere konstante, Entladeleistung zu entnehmen.

Als vorteilhaft wird es angesehen, dass die Energiespeicheranordnung eine mit dem Umpolmodul in Verbindung stehende Ansteuerschaltung aufweist, die derart ausgestaltet ist, dass sie das Umpolmodul von dem Normalbetriebsmodus in den Polaritätsumpolbetriebsmodus - und umgekehrt - schalten kann.

Die Ansteuerschaltung ist derart ausgestaltet, dass sie das Umpolmodul von dem Normalbetriebsmodus in den Polaritätsumpolbetriebsmodus schaltet, wenn das Speichermodul entladen werden soll.

Erfindungsgemäß überwacht die Ansteuerschaltung die Ausgangsspannung des Speichermoduls und schaltet das Umpolmodul von dem Normalbetriebsmodus in den Polaritätsumpolbetriebsmodus, wenn das Speichermodul entladen werden soll und die Ausgangsspannung des Speichermoduls eine vorgegebenen Minimalspannung erreicht oder unterschreitet. Beispielsweise kann in den Polaritätsumpolbetriebsmodus geschaltet werden, wenn die Ausgangsspannung des Speichermoduls 25% der Nennspannung erreicht oder unterschreitet.

Das Umpolmodul weist vorzugsweise ein H-Brückenmodul auf, das vier Schalteinheiten in Brückenanordnung umfasst.

Auch ist es vorteilhaft, wenn das Umpolmodul einen eingangsseitigen Kondensator aufweist, der die von dem Eingangsmodul ausgegebene Zwischenkreisspannung puffert.

Zur Begrenzung des zeitlichen Stromanstiegs weist das Umpolmodul bevorzugt zumindest eine Drossel auf. Eine solche Drossel kann in vorteilhafter Weise den Stromanstieg von ungewünschten Kurzschlussströmen im Fehlerfall begrenzen und so eine Komponentenzerstörung vermeiden.

Als besonders vorteilhaft wird es angesehen, wenn das Umpolmodul sowohl ein Umschaltmodul zur Umpolung als auch ein Strombegrenzungsmodul aufweist. Das Strombegrenzungsmodul ist bevorzugt elektrisch zwischen das Umschaltmodul und das Speichermodul geschaltet.

Das Umschaltmodul weist bevorzugt ein H-Brückenmodul auf, das vier Schalteinheiten in Brückenanordnung sowie einen eingangsseitigen Kondensator umfasst, der die von dem Eingangsmodul ausgegebene Zwischenkreisspannung puffert und elektrisch zwischen das H-Brückenmodul und das Eingangsmodul geschaltet ist.

Das Strombegrenzungsmodul weist bevorzugt zumindest eine Drossel zur Begrenzung des zeitlichen Stromanstiegs auf.

Die erwähnten Schalteinheiten werden vorzugsweise durch Halbleiterschalter (z. B. IGBT-Halbleiterschalter, GTO-Halbleiterschalter oder MOSFET-Halbleiterschalter) gebildet.

Das Umpolmodul erlaubt darüber hinaus - zusätzlich zu dem Normalbetriebsmodus und dem Polaritätsumpolbetriebsmodus - vorzugsweise einen Abschaltmodus, der es ermöglicht, das Eingangsmodul und das Speichermodul zu trennen und/oder das Speichermodul elektrisch kurzzuschließen. Für die Realisierung eines solchen Abschaltmodus kann ein Schalter, zum Beispiel in Form eines pyrotechnischen Schalters oder eines Kurzschließers, beispielsweise zwischen die beiden Mittenanschlüsse des erwähnten H-Brückenmoduls geschaltet sein.

Die bereits erwähnte Drossel zur Stromanstiegsbegrenzung und/oder das Strombegrenzungsmodul sowie der Innenwiderstand des Speichermoduls werden bei Einschalten des Schalters einen Schaden durch zu hohen Kurzschlussstrom verhindern.

Vorzugsweise wird die Energiespeicheranordnung in einem ein- oder mehrphasigen Wechselspannungsnetz eingesetzt. In diesem Falle ist es von Vorteil, wenn die Energiespeicheranordnung zumindest einen Eingangswechselspannungsanschluss aufweist, an dem ein Wechselstrom eingespeist werden kann, und es sich bei dem Eingangsmodul um ein Umrichtermodul handelt.

Die Erfindung bezieht sich darüber hinaus auf ein Verfahren zum Betreiben einer Energiespeicheranordnung, die zumindest eine Reihenschaltung mit mindestens zwei in Reihe geschalteten Teilmodulen und einer Induktivität umfasst, wobei zumindest eines der Teilmodule eines oder mehrerer der Reihenschaltungen ein Eingangsmodul und ein zumindest einen elektrischen Energiespeicher aufweisendes Speichermodul umfasst.

Erfindungsgemäß ist bezüglich eines solchen Verfahrens vorgesehen, dass elektrisch zwischen dem Eingangsmodul und dem Speichermodul ein Umpolmodul geschaltet ist, das in einem Normalbetriebsmodus und einem Polaritätsumpolbetriebsmodus betrieben werden kann, wobei das Umpolmodul im Normalbetriebsmodus die Ausgangsspannung des Eingangsmoduls mit - verglichen mit der Ausgangsspannung des Speichermoduls - derselben Polarität an das Speichermodul anlegt, wobei das Umpolmodul im Polaritätsumpolbetriebsmodus die Ausgangsspannung des Eingangsmoduls mit - verglichen mit der Ausgangsspannung des Speichermoduls - der inversen Polarität an das Speichermodul anlegt, und wobei beim Entladen des Speichermoduls das Umpolmodul dauerhaft oder zumindest zeitweise in dem Polaritätsumpolbetriebsmodus betrieben wird.

Bezüglich der Vorteile des erfindungsgemäßen Verfahrens sei auf die obigen Ausführungen im Zusammenhang mit der erfindungsgemäßen Anordnung verwiesen.

Die Erfindung wird nachfolgend anhand von Ausführungsbeispielen näher erläutert; dabei zeigen beispielhaft
- Figur 1: ein Ausführungsbeispiel für eine erfindungsgemäße Energiespeicheranordnung,
- Figur 2: ein Ausführungsbeispiel für eine Speichereinrichtung, die bei der Energiespeicheranordnung gemäß Figur 1 eingesetzt werden kann und eine Dreieckschaltung aufweist,
- Figur 3: ein Ausführungsbeispiel für eine mehrere Teilmodule aufweisende Reihenschaltung, die bei der Speichereinrichtung gemäß Figur 2 eingesetzt werden kann,
- Figur 4: ein Ausführungsbeispiel für ein Teilmodul, das bei der Reihenschaltung gemäß Figur 3 eingesetzt werden kann,
- Figur 5: ein Ausführungsbeispiel für ein Eingangsmodul, das bei dem Teilmodul gemäß Figur 4 eingesetzt werden kann,
- Figur 6: ein weiteres Ausführungsbeispiel für ein Eingangsmodul, das bei dem Teilmodul gemäß Figur 4 eingesetzt werden kann,
- Figur 7: ein Ausführungsbeispiel für ein Umpolmodul, das bei dem Teilmodul gemäß Figur 4 eingesetzt werden kann,
- Figur 8: ein Ausführungsbeispiel für eine Speichereinrichtung, die bei der Energiespeicheranordnung gemäß Figur 1 eingesetzt werden kann und eine Sternschaltung aufweist,
- Figur 9: ein Ausführungsbeispiel für eine Speichereinrichtung, die bei der Energiespeicheranordnung gemäß Figur 1 eingesetzt werden kann und eine Brückenschaltung aufweist, und
- Figur 10: ein Ausführungsbeispiel für eine einphasige Speichereinrichtung, die bei einer einphasigen Energiespeicheranordnung eingesetzt werden kann.

In den Figuren werden der Übersicht halber für identische oder vergleichbare Komponenten stets dieselben Bezugszeichen verwendet.

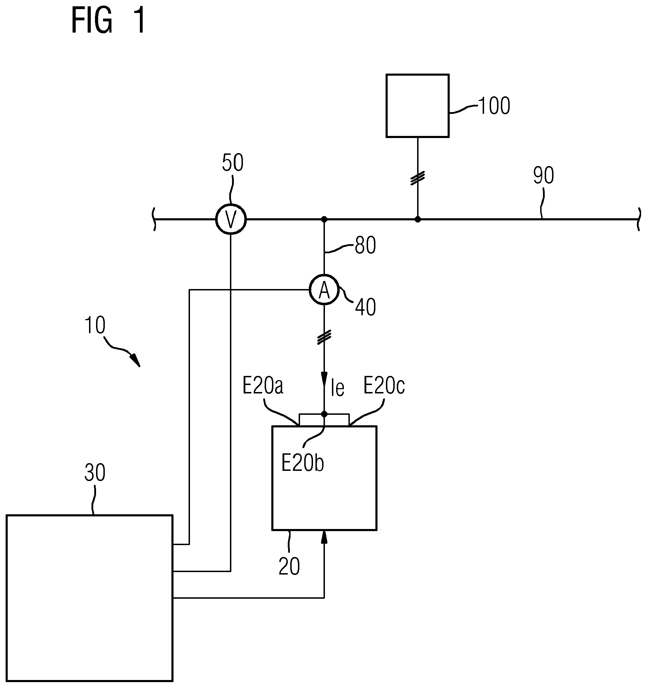

Die Figur 1 zeigt eine Energiespeicheranordnung 10, die eine Speichereinrichtung 20, eine Ansteuerschaltung 30, einen Stromsensor 40 sowie einen Spannungssensor 50 umfasst.

Die Speichereinrichtung 20 weist drei Eingangswechselspannungsanschlüsse E20a, E20b und E20c auf, die an eine dreiphasige elektrische Leitung 80 angeschlossen sind. Über die dreiphasige Leitung 80 steht die Speichereinrichtung 20 mit einer Anschlussschiene 90 und einem nur schematisch angedeuteten Energieverteilnetz 100 in Verbindung.

Die Energiespeicheranordnung 10 gemäß Figur 1 kann beispielsweise wie folgt betrieben werden:
Die Ansteuerschaltung 30 misst mittels des Stromsensors 40 den eingangsseitig in die Speichereinrichtung 20 hineinfließenden (oder aus dieser herausfließenden) dreiphasigen Eingangswechselstrom Ie und mit dem Spannungssensor 50 die an der Speichereinrichtung 20 anliegende dreiphasige Eingangsspannung und bestimmt mit diesen Messwerten den Zustand des Energieverteilnetzes 100. Außerdem ermittelt sie anhand von Messwerten, die von nicht weiter gezeigten Strom- und/oder Spannungssensoren innerhalb der Speichereinrichtung 20 erfasst werden, den Speicherzustand der Speichereinrichtung 20.

Mit Hilfe der Messwerte ermittelt die Ansteuerschaltung 30 eine optimale Ansteuerung der Speichereinrichtung 20 derart, dass das Energieverteilnetz 100 einen möglichst optimalen Netzzustand annimmt und sich die Speichereinrichtung 20 in einem günstigen Speicherzustand befindet, in dem jederzeit Wirkleistung zur Verfügung gestellt oder aufgenommen werden kann.

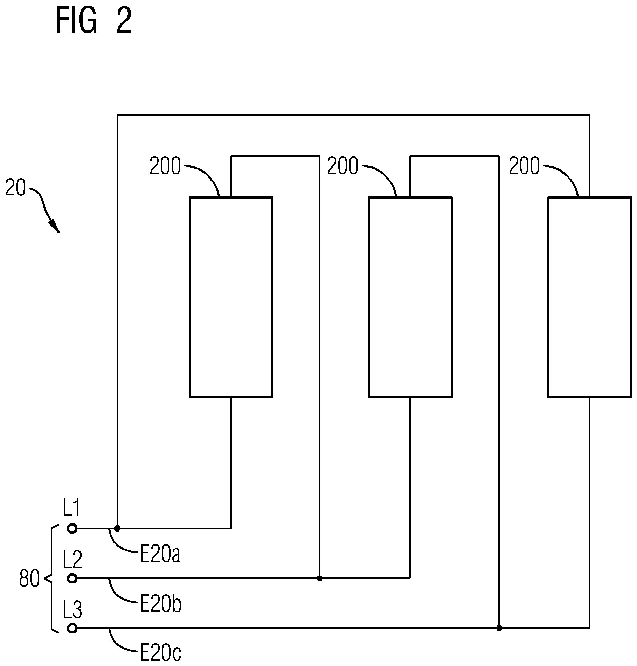

Die Figur 2 zeigt ein Ausführungsbeispiel für eine Speichereinrichtung 20, die bei der Energiespeicheranordnung 10 gemäß Figur 1 eingesetzt werden kann. Man erkennt die drei Eingangswechselspannungsanschlüsse E20a, E20b und E20c, die an die dreiphasige Leitung 80 gemäß Figur 1 angeschlossen sind. Die drei Phasen der dreiphasigen Leitung 80 sind in der Figur 2 mit dem Bezugszeichen L1, L2 und L3 gekennzeichnet.

Die Speichereinrichtung 20 weist drei im Dreieck verschaltete Reihenschaltungen 200 auf, deren in Reihe geschaltete Komponenten aus Gründen der Übersicht in der Figur 2 nicht näher dargestellt sind.

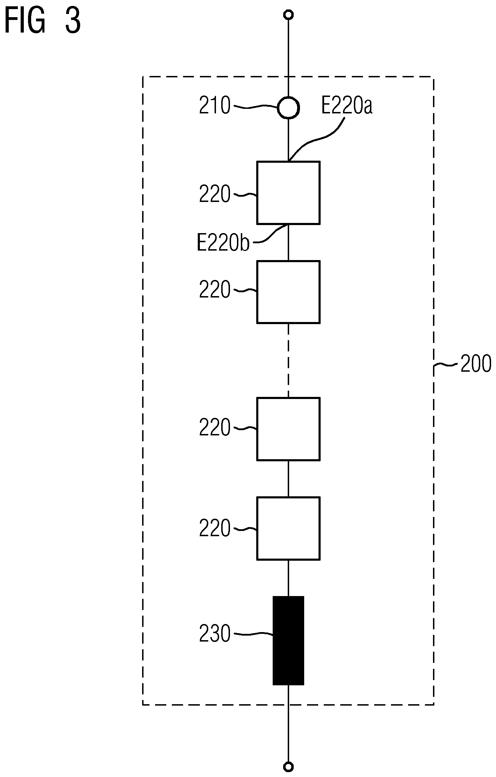

Die Figur 3 zeigt ein Ausführungsbeispiel für eine Reihenschaltung 200, die bei der Speichereinrichtung 20 gemäß Figur 2 eingesetzt werden kann. Die Reihenschaltung 200 gemäß Figur 3 weist einen vorzugsweise an die Ansteuerschaltung 30 gemäß Figur 1 angeschlossenen Stromsensor 210, eine Vielzahl an Teilmodulen 220 sowie eine Induktivität 230 auf. Der Stromsensor 210, die Teilmodule 220 sowie die Induktivität 230 sind elektrisch in Reihe geschaltet. Die Reihenschaltung der Teilmodule 220 erfolgt über deren Eingangsanschlüsse E220a und E220b.

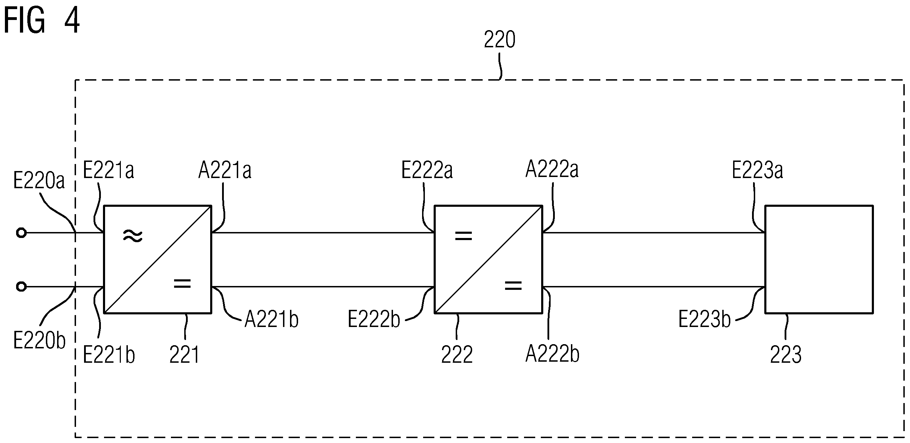

Die Figur 4 zeigt ein Ausführungsbeispiel für ein Teilmodul 220, das bei der Reihenschaltung 200 gemäß Figur 3 eingesetzt werden kann. Das Teilmodul 220 umfasst ein Eingangsmodul 221, bei dem es sich um ein Umrichtermodul zur AC/DC(Wechselspannungs/Gleichspannungs)-Umsetzung handelt, ein Umpolmodul 222 und ein Speichermodul 223.

Das Eingangsmodul 221, das Umpolmodul 222 und das Speichermodul 223 sind kaskadiert hintereinander angeordnet. Dies bedeutet, dass die Ausgänge A221a und A221b des Eingangsmoduls 221 an die Eingänge E222a und E222b des Umpolmoduls 222 und die Ausgänge A222a und A222b des Umpolmoduls 222 an die Eingänge E223a und E223b des Speichermoduls 223 angeschlossen sind. Die Eingänge E221a und E221b des Eingangsmoduls 221 gemäß Figur 4 bilden die Eingänge E220a und E220b des Teilmoduls 220, die zur Bildung der Reihenschaltung der Teilmodule 220 (vgl. Figur 3) mit den Eingängen E221a und E221b von Eingangsmodulen 221 vor- und nachgeordneter Teilmodule 220 in Reihe geschaltet sind (vgl. Figur 3).

Das Speichermodul 223 weist als Energiespeicher vorzugsweise einen oder mehrere Doppelschichtkondensatoren auf, die in der Figur 4 aus Gründen der Übersicht nicht näher dargestellt sind.

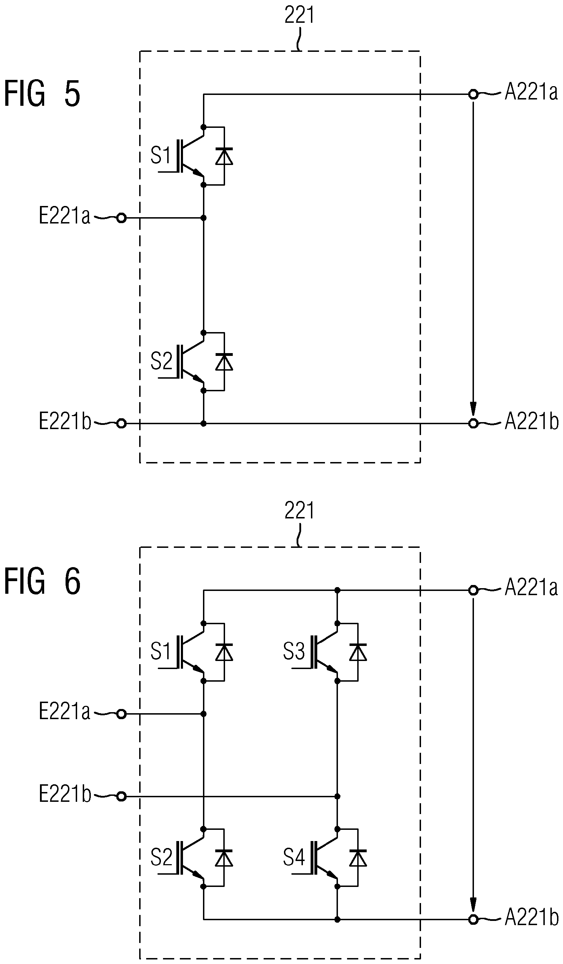

Die Figur 5 zeigt ein Ausführungsbeispiel für ein Eingangsmodul 221, das bei dem Teilmodul 220 gemäß Figur 4 eingesetzt werden kann. Das Eingangsmodul 221 umfasst zwei Schaltelemente S1 und S2, zu denen jeweils eine Diode parallel geschaltet ist. Bei den Schaltelementen S1 und S2 kann es sich beispielsweise um Halbleiterschalter, z. B. in Form von Transistoren, handeln. Die Ausgänge des Eingangsmoduls 221 sind in den Figuren 4 und 5 mit den Bezugszeichen A221a und A221b gekennzeichnet und an die Eingänge E222a und E222b des nachgeordneten Umpolmoduls 222 angeschlossen.

Die Ansteuerung der Schaltelemente S1 und S2 des Eingangsmoduls 221 erfolgt vorzugsweise durch die Ansteuerschaltung 30 gemäß Figur 1 in Abhängigkeit von den Strom- und Spannungswerten, die die Ansteuerschaltung 30 erfasst und auswertet.

Die Figur 6 zeigt ein weiteres Ausführungsbeispiel für ein Eingangsmodul 221, das bei dem Teilmodul 220 gemäß Figur 4 eingesetzt werden kann. Das Eingangsmodul 221 umfasst vier Schaltelemente S1, S2, S3 und S4, zu denen jeweils eine Diode parallel geschaltet ist. Die vier Schaltelemente S1 bis S4 sind in Form einer H-Brückenschaltung verschaltet und werden vorzugsweise von der Ansteuerschaltung 30 gemäß Figur 1 in Abhängigkeit von den Strom- und Spannungswerten angesteuert, die von den beiden Sensoren 40 und 50 und den übrigen bereits erwähnten, aber nicht näher gezeigten, Sensoren geliefert werden. Die Ausgänge des Eingangsmoduls 221 sind in den Figuren 4 und 6 mit den Bezugszeichen A221a und A221b gekennzeichnet und an die Eingänge E222a und E222b des nachgeordneten Umpolmoduls 222 angeschlossen.

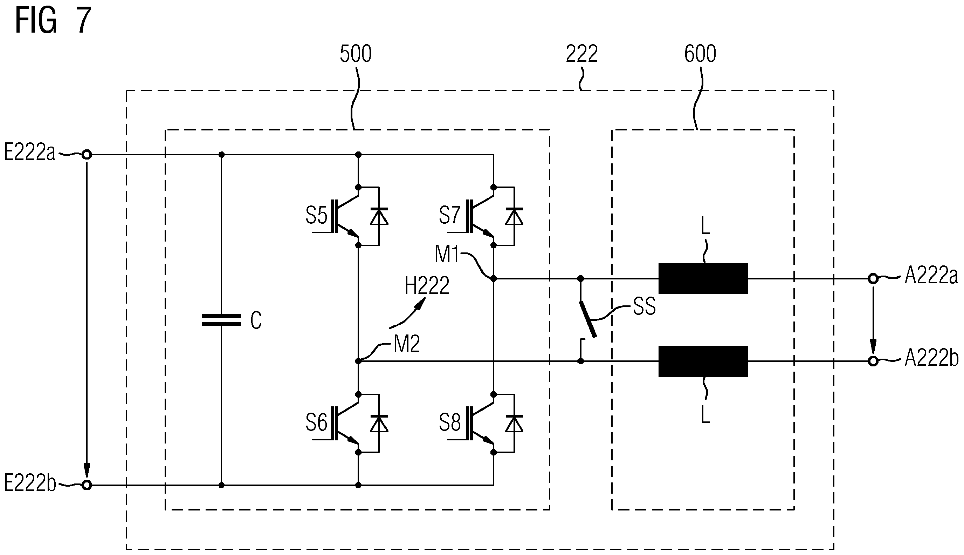

Die Figur 7 zeigt ein Ausführungsbeispiel für ein Umpolmodul 222, das bei dem Teilmodul 220 gemäß Figur 4 eingesetzt werden kann. Das Umpolmodul 222 gemäß Figur 7 weist vier Schaltelemente S5, S6, S7 und S8 auf, zu denen jeweils eine Diode parallel geschaltet ist. Die vier Schaltelemente S5, S6, S7 und S8 sind in Form einer H-Brückenschaltung H222 verschaltet, deren äußere Anschlüsse die Eingänge E222a und E222b des Umpolmoduls 222 bilden.

Zu der H-Brückenschaltung H222 parallel geschaltet ist ein Kondensator C, der somit ebenfalls parallel zu den Eingangsanschlüssen E222a und E222b des Umpolmoduls 222 liegt.

Die H-Brückenschaltung H222 und der Kondensator C bilden bei dem Umpolmodul 222 ein Umschaltmodul 500.

Mittenanschlüsse M1 und M2 der H-Brückenschaltung H222 sind über jeweils eine Induktivität L, vorzugsweise in Form einer Drossel, an die Ausgangsanschlüsse A222a und A222b des Umpolmoduls 222 angeschlossen. Alternativ kann auch nur einer der beiden Mittenanschlüsse M1 oder M2 der H-Brückenschaltung H222 über eine Induktivität L, vorzugsweise in Form einer Drossel, an den jeweiligen Ausgangsanschluss A222a bzw. A222b des Umpolmoduls 222 angeschlossen sein.

Die beiden Induktivitäten L bilden bei dem Umpolmodul 222 ein Strombegrenzungsmodul 600 zur Begrenzung des zeitlichen Stromanstiegs.

Die Ausgangsanschlüsse A222a und A222b des Umpolmoduls 222 sind an die Eingangsanschlüsse E223a und E223b des nachgeschalteten Speichermoduls 223 (vgl. Figur 4) angeschlossen.

Die Ansteuerung der vier Schaltelemente S5, S6, S7 und S8 erfolgt vorzugsweise durch die Ansteuerschaltung 30 gemäß Figur 1 in Abhängigkeit von den Messwerten, die von den beiden Sensoren 40 und 50 und den übrigen bereits erwähnten, aber nicht näher gezeigten, Sensoren geliefert werden.

Das Umpolmodul 222 kann durch die Ansteuerung der vier Schaltelemente S5, S6, S7 und S8 in einem Normalbetriebsmodus und einem Polaritätsumpolbetriebsmodus betrieben werden kann.

Im Normalbetriebsmodus legt das Umpolmodul 222 die Ausgangsspannung des Eingangsmoduls mit - verglichen mit der Ausgangsspannung des Speichermoduls 223 - derselben Polarität an das Speichermodul 223. Im Normalbetriebsmodus kann das Umpolmodul 222 bei entsprechender Ansteuerung der vier Schaltelemente S5, S6, S7 und S8 durch die Ansteuerschaltung 30 als Gleichspannungsumrichter bzw. DC/DC-Steller betrieben werden.

Im Polaritätsumpolbetriebsmodus legt das Umpolmodul 222 die Ausgangsspannung des Eingangsmoduls 221 mit - verglichen mit der Ausgangsspannung des Speichermoduls 223 - der inversen Polarität an das Speichermodul an. Auch im Polaritätsumpolbetriebsmodus kann das Umpolmodul 222 bei entsprechender Ansteuerung der vier Schaltelemente S5, S6, S7 und S8 durch die Ansteuerschaltung 30 als Gleichspannungsumrichter bzw. DC/DC-Steller betrieben werden, allerdings erfolgt dies mit Polaritätsumkehr zwischen den beiden Anschlussseiten.

Das Umschalten des Betriebsmodus des Umpolmoduls 222 erfolgt durch die Ansteuerung der Ansteuerschaltung 30, nämlich durch die erwähnte Ansteuerung der vier Schaltelemente S5, S6, S7 und S8. Vorzugsweise schaltet die Ansteuerschaltung 30 das Umpolmodul 222 von dem Normalbetriebsmodus in den Polaritätsumpolbetriebsmodus, wenn das Speichermodul 223 entladen, insbesondere tief entladen, werden soll.

Besonders bevorzugt überwacht die Ansteuerschaltung 30 die Ausgangsspannung des Speichermoduls 223 und schaltet das Umpolmodul 222 von dem Normalbetriebsmodus in den Polaritätsumpolbetriebsmodus, wenn das Speichermodul 223 entladen werden soll und die Ausgangsspannung des Speichermoduls 223 eine vorgegebene Minimalspannung erreicht oder unterschreitet.

Als besonders vorteilhaft wird es angesehen, wenn das Umpolmodul 222 zusätzlich zu dem Normalbetriebsmodus und dem Polaritätsumpolbetriebsmodus einen Abschaltmodus erlaubt, bei dem das Eingangsmodul 221 und das Speichermodul 223 getrennt werden und/oder das Speichermodul elektrisch kurzgeschlossen wird. Für die Realisierung eines solchen Abschaltmodus kann ein Schalter SS, zum Beispiel in Form eines pyrotechnischen Schalters oder eines Kurzschließers, beispielsweise zwischen die beiden Mittenanschlüsse M1 und M2 geschaltet sein.

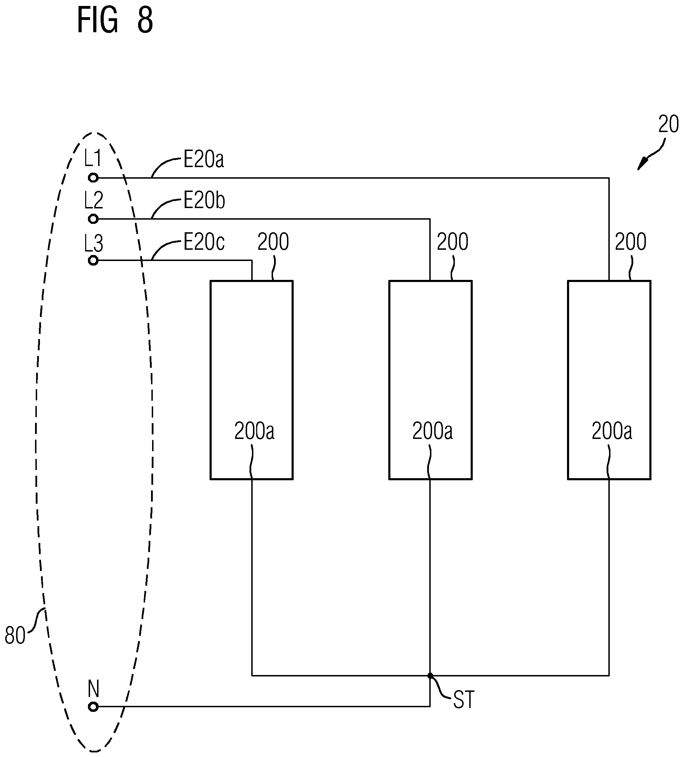

Die Figur 8 zeigt ein weiteres Ausführungsbeispiel für eine Speichereinrichtung 20, die bei der Energiespeicheranordnung 10 gemäß Figur 1 eingesetzt werden kann. Im Unterschied zu dem Ausführungsbeispiel gemäß Figur 2 sind die Reihenschaltungen 200 der Speichereinrichtung 20 nicht im Dreieck verschaltet, sondern sternförmig unter Bildung einer Sternschaltung. Der durch die Verschaltung gebildete Sternpunkt ist in der Figur 8 mit dem Bezugszeichen ST gekennzeichnet. An den Sternpunkt ST kann ein Rückleiter N, beispielsweise der Rückleiter der dreiphasigen Leitung 80 gemäß Figur 1, angeschlossen werden.

Der Aufbau der Reihenschaltungen 200 ist in der Figur 8 aus Gründen der Übersicht nicht näher dargestellt. Die Reihenschaltungen 200 können beispielsweise den Reihenschaltungen 200 der Speichereinrichtung 20 gemäß Figur 2 entsprechen bzw. so aufgebaut sein, wie dies im Zusammenhang mit den Figuren 3 bis 7 oben im Detail beispielhaft erläutert worden ist. Bezüglich des Aufbaus der Reihenschaltungen 200 gemäß Figur 8 gelten die obigen Ausführungen somit entsprechend.

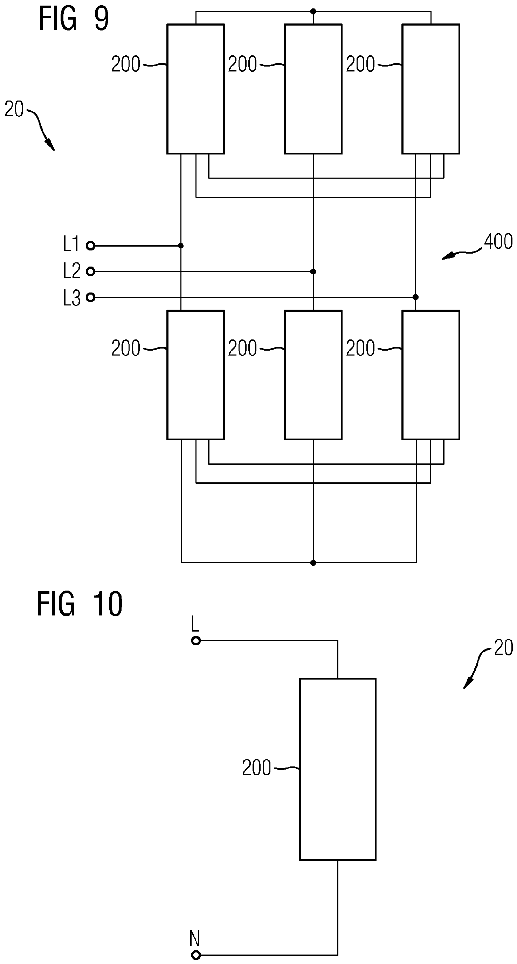

Die Figur 9 zeigt ein Ausführungsbeispiel für eine Speichereinrichtung 20, bei der Reihenschaltungen 200, die jeweils mindestens zwei in Reihe geschaltete und aus Gründen der Übersicht in der Figur 11 nicht gezeigte Teilmodule aufweisen, eine Brückenschaltung 400 bilden.

Der Aufbau der Reihenschaltungen 200 der Speichereinrichtung 20 kann beispielsweise dem Aufbau der Reihenschaltungen 200 entsprechen, wie sie im Zusammenhang mit den Figuren 2 bis 7 oben im Detail erläutert worden sind.

Die Figur 10 zeigt ein Ausführungsbeispiel für eine einphasige Speichereinrichtung 20, die eine Reihenschaltung 200 mit einer Vielzahl an in Reihe geschalteten und in der Figur 10 aus Gründen der Übersicht nicht weiter dargestellten Teilmodulen umfasst. Die Reihenschaltung 200 der Energiespeicheranordnung 20 gemäß Figur 10 kann von ihrem Aufbau den Reihenschaltungen 200 entsprechen, wie sie im Zusammenhang mit den Figuren 2 bis 7 oben im Detail erläutert worden sind.

Die Speichereinrichtung 20 bzw. die Reihenschaltung 200 kann an ein einphasiges Wechselspannungsnetz (wie gezeigt) oder alternativ an ein Gleichspannungsnetz, beispielsweise an einen Gleichspannungskreis einer Hochspannungs-Gleichstrom-Übertragungseinrichtung (HGÜ), angeschlossen werden. Im letztgenannten Fall handelt es sich bei dem Eingangsmodul 221 vorzugsweise um einen DC/DC-Steller bzw. Gleichspannungs/- Gleichspannungs-Umsetzer.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Energiespeicheranordnung
- 20: Speichereinrichtung
- 30: Ansteuerschaltung
- 40: Stromsensor
- 50: Spannungssensor
- 60: Stromsensor
- 70: Spannungssensor
- 80: elektrische Leitung
- 90: Anschlussschiene
- 100: Energieverteilnetz
- 110: elektrische Gleichstromleitung
- 120: Gleichstromlast
- 200: Reihenschaltung
- 200a: Ausgangsanschluss
- 200b: Ausgangsanschluss
- 210: Stromsensor
- 220: Teilmodule
- 221: Eingangsmodul
- 222: Umpolmodul
- 223: Speichermodul
- 224: Gleichrichtermodul
- 224L: Induktivität
- 230: Induktivität
- 400: Brückenschaltung

- A221a: Ausgangsanschluss des Eingangsmoduls
- A221b: Ausgangsanschluss des Eingangsmoduls
- A222a: Ausgangsanschluss des Umpolmoduls
- A222b: Ausgangsanschluss des Umpolmoduls
- C: Kondensator
- E20a: Eingangswechselspannungsanschluss
- E20b: Eingangswechselspannungsanschluss
- E20c: Eingangswechselspannungsanschluss
- E220a: Eingangsanschluss des Teilmoduls
- E220b: Eingangsanschluss des Teilmoduls
- E221a: Eingangsanschluss des Eingangsmoduls
- E221b: Eingangsanschluss des Eingangsmoduls
- E222a: Eingangsanschluss des Umpolmoduls
- E222b: Eingangsanschluss des Umpolmoduls
- E223a: Eingangsanschluss des Speichermoduls
- E223b: Eingangsanschluss des Speichermoduls
- H222: H-Brückenschaltung
- Ie: Eingangswechselstrom
- L1: Phase
- L2: Phase
- L3: Phase
- M1: Mittenanschluss
- M2: Mittenanschluss
- N: Rückleiter
- ST: Sternpunkt
- S1: Schaltelement
- S2: Schaltelement
- S3: Schaltelement
- S4: Schaltelement
- S5: Schaltelement
- S6: Schaltelement
- S7: Schaltelement
- S8: Schaltelement

## Patentansprüche

1. Energiespeicheranordnung (10), die zumindest eine Reihenschaltung (200) mit mindestens zwei in Reihe geschalteten Teilmodulen (220) und einer Induktivität umfasst, wobei zumindest eines der Teilmodule (220) einer oder mehrerer der Reihenschaltungen (200) ein Eingangsmodul (221) und ein zumindest einen elektrischen Energiespeicher aufweisendes Speichermodul (223) umfasst, wobei
das Eingangsmodul (221) zwei Schaltelemente (S1 und S2) umfasst, zu denen jeweils eine Diode parallel geschaltet ist, oder vier Schaltelemente (S1, S2, S3, S4) umfasst, zu denen jeweils eine Diode parallel geschaltet ist, wobei die vier Schaltelemente (S1 bis S4) in Form einer H-Brückenschaltung verschaltet sind,
**dadurch gekennzeichnet, dass**
- elektrisch zwischen dem Eingangsmodul (221) und dem Speichermodul (223) ein Umpolmodul (222) geschaltet ist, das in einem Normalbetriebsmodus und einem Polaritätsumpolbetriebsmodus betrieben werden kann, wobei das Umpolmodul (222) eine H-Brückenschaltung (H222) sowie einen Kondensator (C) umfasst, der zu der H-Brückenschaltung und zu den Eingangsanschlüssen (E222a, E222b) des Umpolmoduls (222) parallel geschaltet ist,
- wobei Ausgänge (A221a, A221b) des Eingangsmoduls (221) an Eingänge (E222a, E222b) des nachgeordneten Umpolmoduls (222) angeschlossen sind und Ausgangsanschlüsse (A222a, A222b) des Umpolmoduls (222) an die Eingangsanschlüsse (E223a, E223b) des nachgeschalteten Speichermoduls (223) angeschlossen sind,
- wobei das Umpolmodul (222) im Normalbetriebsmodus die Ausgangsspannung des Eingangsmoduls (221) mit - verglichen mit der Ausgangsspannung des Speichermoduls (223) - derselben Polarität an das Speichermodul anlegt,
- wobei das Umpolmodul (222) im Polaritätsumpolbetriebsmodus die Ausgangsspannung des Eingangsmoduls (221) mit - verglichen mit der Ausgangsspannung des Speichermoduls (223) - der inversen Polarität an das Speichermodul anlegt, und
- wobei die Energiespeicheranordnung (10) eine mit dem Umpolmodul (222) in Verbindung stehende Ansteuerschaltung (30) aufweist, die derart ausgestaltet ist, dass sie das Umpolmodul (222) von dem Normalbetriebsmodus in den Polaritätsumpolbetriebsmodus schaltet, wenn das Speichermodul (223) entladen werden soll,
- wobei die Ansteuerschaltung dazu eingerichtet ist, die Ausgangsspannung des Speichermoduls (223) zu überwachen und das Umpolmodul (222) von dem Normalbetriebsmodus in den Polaritätsumpolbetriebsmodus zu schalten, wenn das Speichermodul (223) entladen werden soll und die Ausgangsspannung des Speichermoduls (223) eine vorgegebene Minimalspannung erreicht oder unterschreitet.

2. Energiespeicheranordnung (10) nach Anspruch 1,
**dadurch gekennzeichnet, dass**
das Umpolmodul (222) ein H-Brückenmodul aufweist, das vier Schalteinheiten in Brückenanordnung umfasst.

3. Energiespeicheranordnung (10) nach einem der voranstehenden Ansprüche,
**dadurch gekennzeichnet, dass**
das Umpolmodul (222) einen eingangsseitigen Kondensator aufweist, der die von dem Eingangsmodul (221) ausgegebene Zwischenkreisspannung puffert.

4. Energiespeicheranordnung (10) nach einem der voranstehenden Ansprüche,
**dadurch gekennzeichnet, dass**
das Umpolmodul (222) zumindest eine Drossel zur Begrenzung des zeitlichen Stromanstiegs aufweist.

5. Energiespeicheranordnung (10) nach einem der voranstehenden Ansprüche,
**dadurch gekennzeichnet, dass**
das Umpolmodul (222) ein Umschaltmodul (500) zur Umpolung und ein Strombegrenzungsmodul (600) aufweist.

6. Energiespeicheranordnung (10) nach Anspruch 5,
**dadurch gekennzeichnet, dass**
das Strombegrenzungsmodul (600) elektrisch zwischen das Umschaltmodul (500) und das Speichermodul (223) geschaltet ist.

7. Energiespeicheranordnung (10) nach einem der voranstehenden Ansprüche 5 bis 6,
**dadurch gekennzeichnet, dass**
das Umschaltmodul (500) ein H-Brückenmodul aufweist, das vier Schalteinheiten in Brückenanordnung sowie einen eingangsseitigen Kondensator umfasst, der die von dem Eingangsmodul (221) ausgegebene Zwischenkreisspannung puffert und elektrisch zwischen das H-Brückenmodul und das Eingangsmodul (221) geschaltet ist.

8. Energiespeicheranordnung (10) nach einem der voranstehenden Ansprüche 5 bis 7,
**dadurch gekennzeichnet, dass**
das Strombegrenzungsmodul (600) zumindest eine Drossel zur Begrenzung des zeitlichen Stromanstiegs aufweist.

9. Energiespeicheranordnung (10) nach einem der voranstehenden Ansprüche,
**dadurch gekennzeichnet, dass**
die Schalteinheiten Halbleiterschalter sind.

10. Energiespeicheranordnung (10) nach einem der voranstehenden Ansprüche,
**dadurch gekennzeichnet, dass**
das Umpolmodul (222) zusätzlich zu dem Normalbetriebsmodus und dem Polaritätsumpolbetriebsmodus einen Abschaltmodus erlaubt, bei dem das Eingangsmodul (221) und das Speichermodul (223) getrennt sind und/oder das Speichermodul elektrisch kurzgeschlossen ist.

11. Verfahren zum Betreiben einer Energiespeicheranordnung (10), die zumindest eine Reihenschaltung (200) mit mindestens zwei in Reihe geschalteten Teilmodulen (220) und einer Induktivität umfasst, wobei zumindest eines der Teilmodule (220) einer oder mehrerer der Reihenschaltungen (200) ein Eingangsmodul (221) und ein zumindest einen elektrischen Energiespeicher aufweisendes Speichermodul (223) umfasst, wobei das Eingangsmodul (221) zwei Schaltelemente (S1 und S2) umfasst, zu denen jeweils eine Diode parallel geschaltet ist, oder vier Schaltelemente (S1, S2, S3, S4) umfasst, zu denen jeweils eine Diode parallel geschaltet ist, wobei die vier Schaltelemente (S1 bis S4) in Form einer H-Brückenschaltung verschaltet sind,
**dadurch gekennzeichnet, dass**
- elektrisch zwischen dem Eingangsmodul (221) und dem Speichermodul (223) ein Umpolmodul (222) geschaltet ist, das in einem Normalbetriebsmodus und einem Polaritätsumpolbetriebsmodus betrieben werden kann, wobei das Umpolmodul (222) eine H-Brückenschaltung (H222) sowie einen Kondensator (C) umfasst, der zu der H-Brückenschaltung und zu den Eingangsanschlüssen (E222a, E222b) des Umpolmoduls (222) parallel geschaltet ist,
- wobei Ausgänge (A221a, A221b) des Eingangsmoduls (221) an Eingänge (E222a, E222b) des nachgeordneten Umpolmoduls (222) angeschlossen sind und Ausgangsanschlüsse (A222a, A222b) des Umpolmoduls (222) an die Eingangsanschlüsse (E223a, E223b) des nachgeschalteten Speichermoduls (223) angeschlossen sind,
- wobei das Umpolmodul (222) im Normalbetriebsmodus die Ausgangsspannung des Eingangsmoduls (221) mit - verglichen mit der Ausgangsspannung des Speichermoduls (223) - derselben Polarität an das Speichermodul anlegt,
- wobei das Umpolmodul (222) im Polaritätsumpolbetriebsmodus die Ausgangsspannung des Eingangsmoduls (221) mit - verglichen mit der Ausgangsspannung des Speichermoduls (223) - der inversen Polarität an das Speichermodul anlegt, und
- wobei die Energiespeicheranordnung (10) eine mit dem Umpolmodul (222) in Verbindung stehende Ansteuerschaltung (30) aufweist, von der das Umpolmodul (222) von dem Normalbetriebsmodus in den Polaritätsumpolbetriebsmodus geschaltet wird, wenn das Speichermodul (223) entladen werden soll, wobei von der Ansteuerschaltung (30) die Ausgangsspannung des Speichermoduls (223) überwacht wird und das Umpolmodul (222) von dem Normalbetriebsmodus in den Polaritätsumpolbetriebsmodus geschaltet wird, wenn das Speichermodul (223) entladen werden soll und die Ausgangsspannung des Speichermoduls (223) eine vorgegebene Minimalspannung erreicht oder unterschreitet.

## Claims

1. Energy storage arrangement (10) which comprises at least one series circuit (200) comprising at least two submodules (220) connected in series and an inductor, wherein at least one of the submodules (220) of one or more of the series circuits (200) comprises an input module (221) and a storage module (223) which has at least one electrical energy store, wherein the input module (221) comprises two switching elements (S1 and S2), each with a diode connected in parallel therewith, or four switching elements (S1, S2, S3, S4), each with a diode connected in parallel therewith, wherein the four switching elements (S1 to S4) are interconnected in the form of an H-bridge circuit,
**characterized in that**
- a polarity reversal module (222) is electrically connected between the input module (221) and the storage module (223) and can be operated in a normal operating mode and a polarity reversal operating mode, wherein the polarity reversal module (222) comprises an H-bridge circuit (H222) and a capacitor (C) which is connected in parallel with the H-bridge circuit and with the input connections (E222a, E222b) of the polarity reversal module (222),
- wherein outputs (A221a, A221b) of the input module (221) are connected to inputs (E222a, E222b) of the downstream polarity reversal module (222) and output connections (A222a, A222b) of the polarity reversal module (222) are connected to the input connections (E223a, E223b) of the downstream storage module (223),
- wherein, in the normal operating mode, the polarity reversal module (222) applies the output voltage of the input module (221) with the same polarity - as compared with the output voltage of the storage module (223) - to the storage module,
- wherein, in the polarity reversal operating mode, the polarity reversal module (222) applies the output voltage of the input module (221) with the inverse polarity - as compared with the output voltage of the storage module (223) - to the storage module, and
- wherein the energy storage arrangement (10) has an actuating circuit (30) which is connected to the polarity reversal module (222) and is designed in such a way that it switches the polarity reversal module (222) from the normal operating mode into the polarity reversal operating mode when the storage module (223) is intended to be discharged,
- wherein the actuating circuit is configured to monitor the output voltage of the storage module (223) and to switch the polarity reversal module (222) from the normal operating mode into the polarity reversal operating mode when the storage module (223) is intended to be discharged and the output voltage of the storage module (223) reaches or falls below a predefined minimum voltage.

2. Energy storage arrangement (10) according to Claim 1,
**characterized in that**
the polarity reversal module (222) has an H-bridge module which comprises four switching units in the bridge arrangement.

3. Energy storage arrangement (10) according to either of the preceding claims,
**characterized in that**
the polarity reversal module (222) has a capacitor on the input side which buffers the DC link voltage output from the input module (221).

4. Energy storage arrangement (10) according to one of the preceding claims,
**characterized in that**
the polarity reversal module (222) has at least one choke for limiting the increase in current over time.

5. Energy storage arrangement (10) according to one of the preceding claims,
**characterized in that**
the polarity reversal module (222) has a switchover module (500) for reversing the polarity and a current-limiting module (600) .

6. Energy storage arrangement (10) according to Claim 5,
**characterized in that**
the current-limiting module (600) is electrically connected between the switchover module (500) and the storage module (223) .

7. Energy storage arrangement (10) according to either of preceding Claims 5 and 6,
**characterized in that**
the switchover module (500) has an H-bridge module which comprises four switching units in the bridge arrangement and a capacitor on the input side which buffers the DC link voltage output from the input module (221) and is electrically connected between the H-bridge module and the input module (221) .

8. Energy storage arrangement (10) according to one of preceding Claims 5 to 7,
**characterized in that**
the current-limiting module (600) has at least one choke for limiting the increase in current over time.

9. Energy storage arrangement (10) according to one of the preceding claims,
**characterized in that**
the switching units are semiconductor switches.

10. Energy storage arrangement (10) according to one of the preceding claims,
**characterized in that**
the polarity reversal module (222) allows, in addition to the normal operating mode and the polarity reversal operating mode, a switched-off mode, in which the input module (221) and the storage module (223) are disconnected and/or the storage module is electrically short-circuited.

11. Method for operating an energy storage arrangement (10) which comprises at least one series circuit (200) comprising at least two submodules (220) connected in series and an inductor, wherein at least one of the submodules (220) of one or more of the series circuits (200) comprises an input module (221) and a storage module (223) which has at least one electrical energy store, wherein
the input module (221) comprises two switching elements (S1 and S2), each with a diode connected in parallel therewith, or four switching elements (S1, S2, S3, S4), each with a diode connected in parallel therewith, wherein the four switching elements (S1 to S4) are interconnected in the form of an H-bridge circuit,
**characterized in that**
- a polarity reversal module (222) is electrically connected between the input module (221) and the storage module (223) and can be operated in a normal operating mode and a polarity reversal operating mode, wherein the polarity reversal module (222) comprises an H-bridge circuit (H222) and a capacitor (C) which is connected in parallel with the H-bridge circuit and with the input connections (E222a, E222b) of the polarity reversal module (222),
- wherein outputs (A221a, A221b) of the input module (221) are connected to inputs (E222a, E222b) of the downstream polarity reversal module (222) and output connections (A222a, A222b) of the polarity reversal module (222) are connected to the input connections (E223a, E223b) of the downstream storage module (223),
- wherein, in the normal operating mode, the polarity reversal module (222) applies the output voltage of the input module (221) with the same polarity - as compared with the output voltage of the storage module (223) - to the storage module,
- wherein, in the polarity reversal operating mode, the polarity reversal module (222) applies the output voltage of the input module (221) with the inverse polarity - as compared with the output voltage of the storage module (223) - to the storage module, and
- wherein the energy storage arrangement (10) has an actuating circuit (30) which is connected to the polarity reversal module (222) and is used to switch the polarity reversal module (222) from the normal operating mode into the polarity reversal operating mode when the storage module (223) is intended to be discharged, wherein the output voltage of the storage module (223) is monitored by the actuating circuit (30) and the polarity reversal module (222) is switched from the normal operating mode into the polarity reversal operating mode when the storage module (223) is intended to be discharged and the output voltage of the storage module (223) reaches or falls below a predefined minimum voltage.

## Revendications

1. Montage (10) d'accumulation d'énergie, qui comprend au moins un circuit (200) série ayant au moins deux modules (220) partiels montés en série et une inductance, dans lequel au moins l'un des modules (220) partiel de l'un ou des plusieurs des circuits (200) série comprend un module (221) d'entrée et un module (223) d'accumulateur ayant au moins un accumulateur d'énergie électrique, dans lequel
le module (221) d'entrée comprend deux éléments (S1 et S2) de coupure, avec lesquels respectivement une diode est montée en parallèle ou comprend quatre éléments (S1, S2, S3, S4) de coupure, avec lesquels respectivement une diode est montée en parallèle, dans lequel les quatre éléments (S1 à S4) de coupure sont montés sous la forme d'un circuit en pont en H,
**caractérisé en ce que**
- est monté électriquement, entre le module (221) d'entrée et le module (223) d'accumulateur, un module (222) d'inversion de polarité, qui peut fonctionner dans un mode de fonctionnement normal et dans un mode de fonctionnement d'inversion de polarité, dans lequel le module (222) d'inversion de polarité comprend un circuit (H222) en pont en H, ainsi qu'un condensateur (C), qui est monté en parallèle avec le circuit en pont en H et avec les bornes (E222a, E222b) d'entrée du module (222) d'inversion de polarité,
- dans lequel des sorties (A221a, A221b) du module (221) d'entrée sont raccordées aux entrées (E222a, E222b) du module (222) d'inversion de polarité suivant et des bornes (A222a, A222b) de sortie du module (222) d'inversion de polarité sont raccordées aux bornes (E223a, E223b) d'entrée du module (223) d'accumulateur suivant,
- dans lequel le module (222) d'inversion de polarité applique, dans le mode de fonctionnement normal, au module d'accumulateur la tension de sortie du module (221) d'entrée avec - par rapport à la tension de sortie du module (223) d'accumulateur - la même polarité,
- dans lequel le module (222) d'inversion de polarité applique, dans le mode de fonctionnement d'inversion de polarité, au module d'accumulateur, la tension de sortie du module (221) d'entrée avec - par rapport à la tension de sortie du module (223) d'accumulateur - la polarité inverse, et
- dans lequel le montage (10) d'accumulation d'énergie a un circuit (30) de commande, qui est en liaison avec le module (222) d'inversion de polarité et qui est conformé de manière à faire passer le module (222) d'inversion de polarité du mode de fonctionnement normal au mode de fonctionnement d'inversion de polarité, si le module (223) d'accumulateur doit être déchargé,
- dans lequel le circuit de commande est conçu pour contrôler la tension de sortie du module (223) d'accumulateur et pour faire passer le module (222) d'inversion de polarité du mode de fonctionnement normal au mode de fonctionnement d'inversion de polarité, si le module (223) d'accumulateur doit être déchargé et si la tension de sortie du module (223) d'accumulateur atteint ou est inférieure à une tension minimum donnée à l'avance.

2. Montage (10) d'accumulation d'énergie suivant la revendication 1,
**caractérisé en ce que**
le module (222) d'inversion de polarité a un module en pont en H, qui comprend quatre unités de coupure dans le montage en pont.

3. Montage (10) d'accumulation d'énergie suivant l'une des revendications précédentes,
**caractérisé en ce que**
le module (222) d'inversion de polarité a un condensateur du côté de l'entrée, qui tamponne la tension de circuit intermédiaire donnée par le module (221) d'entrée.

4. Montage (10) d'accumulation d'énergie suivant l'une des revendications précédentes,
**caractérisé en ce que**
le module (222) d'inversion de polarité a au moins une bobine de self pour la limitation de l'augmentation du courant en fonction du temps.

5. Montage (10) d'accumulation d'énergie suivant l'une des revendications précédentes,
**caractérisé en ce que**
le module (222) d'inversion de polarité a un module (500) d'inversion pour inverser la polarité et un module (600) de limitation du courant.

6. Montage (10) d'accumulation d'énergie suivant la revendication 5,
**caractérisé en ce que**
le module (600) de limitation du courant est monté électriquement entre le module (500) d'inversion et le module (223) d'accumulateur.

7. Montage (10) d'accumulation d'énergie suivant l'une des revendications 5 à 6 précédentes,
**caractérisé en ce que**
le module (500) d'inversion a un module en pont en H, qui comprend quatre unités de coupure dans le montage en pont ainsi qu'un condensateur du côté de l'entrée, qui tamponne la tension de circuit intermédiaire donnée par le module (221) d'entrée et qui est monté électriquement entre le module en pont en H et le module (221) d'entrée.

8. Montage (10) d'accumulation d'énergie suivant l'une des revendications 5 à 7 précédentes,
**caractérisé en ce que**
le module (600) de limitation du courant a au moins une bobine de self pour la limitation de l'augmentation du courant en fonction du temps.

9. Montage (10) d'accumulation d'énergie suivant l'une des revendications précédentes,
**caractérisé en ce que**
les unités de coupure sont des interrupteurs à semiconducteur.

10. Montage (10) d'accumulation d'énergie suivant l'une des revendications précédentes,
**caractérisé en ce que**
le module (222) d'inversion de polarité permet, en plus du mode de fonctionnement normal et du mode de fonctionnement d'inversion de polarité, un mode d'interruption, dans lequel le module (221) d'entrée et le module (223) d'accumulateur sont séparés et/ou le module d'accumulateur est court-circuité électriquement.

11. Procédé pour faire fonctionner un montage (10) d'accumulation d'énergie, qui comprend au moins un circuit (200) série ayant au moins deux modules (220) partiels montés en série et une inductance, dans lequel au moins l'un des modules (220) partiel de l'un ou des plusieurs des circuits (200) série comprend un module (221) d'entrée et un module (223) d'accumulateur ayant au moins un accumulateur d'énergie électrique, dans lequel le module (221) d'entrée comprend deux éléments (S1 et S2) de coupure, avec lesquels respectivement une diode est montée en parallèle ou comprend quatre éléments (S1, S2, S3, S4) de coupure, avec lesquels respectivement une diode est montée en parallèle, dans lequel les quatre éléments (S1 à S4) de coupure sont montés sous la forme d'un circuit en pont en H,
**caractérisé en ce que**
- est monté électriquement, entre le module (221) d'entrée et le module (223) d'accumulateur, un module (222) d'inversion de polarité, qui peut fonctionner dans un mode de fonctionnement normal et dans un mode de fonctionnement d'inversion de polarité, dans lequel le module (222) d'inversion de polarité comprend un circuit (H222) en pont en H, ainsi qu'un condensateur (C), qui est monté en parallèle avec le circuit en pont en H et avec les bornes (E222a, E222b) d'entrée du module (222) d'inversion de polarité,
- dans lequel des sorties (A221a, A221b) du module (221) d'entrée sont raccordées aux entrées (E222a, E222b) du module (222) d'inversion de polarité suivant et des bornes (A222a, A222b) de sortie du module (222) d'inversion de polarité sont raccordées aux bornes (E223a, E223b) d'entrée du module (223) d'accumulateur suivant,
- dans lequel le module (222) d'inversion de polarité applique, dans le mode de fonctionnement normal, au module d'accumulateur la tension de sortie du module (221) d'entrée avec - par rapport à la tension de sortie du module (223) d'accumulateur - la même polarité,
- dans lequel le module (222) d'inversion de polarité applique, dans le mode de fonctionnement d'inversion de polarité, au module d'accumulateur, la tension de sortie du module (221) d'entrée avec - par rapport à la tension de sortie du module (223) d'accumulateur - la polarité inverse, et
- dans lequel le montage (10) d'accumulation d'énergie a un circuit (30) de commande, qui est en liaison avec le module (222) d'inversion de polarité et qui est conformé de manière à faire passer le module (222) d'inversion de polarité du mode de fonctionnement normal au mode de fonctionnement d'inversion de polarité, si le module (223) d'accumulateur doit être déchargé, dans lequel on contrôle, par le dispositif (30) de commande, la tension de sortie du module (223) d'accumulateur et on fait passer le module (222) d'inversion du mode de fonctionnement normal dans le mode de fonctionnement d'inversion de polarité, si le module (223) d'accumulateur doit être déchargé et si la tension de sortie du module (223) d'accumulateur atteint une tension minimum donnée à l'avance ou lui est inférieure.
